# EUROPEAN PATENT APPLICATION

(11) **EP 1 535 586 A2**
(43) Date of publication of application: **01.06.2005**
(21) Application number: 04105998.1
(22) Date of filing: 23.11.2004
(51) Int. Cl.: A61C 7/00

(54) **Orthodontic microscrew**

(30) Priority: 25.11.2003 IT FI20030299
(71) Applicant: H.B.S. S.R.L., 50129 FIRENZE (IT)
(72) Inventor: Corti, Leonardo, 50133, FIRENZE (IT); Moschini, Simone, 50014, FIESOLE (IT); Lo PestiI, Alessandro, 36015, SCHIO (IT)
(74) Representative: Gervasi, Gemma, Dr.

(57) **Abstract**

Herein disclosed is an orthodontic microscrew, suitable to be inserted into the mandibular or maxillary bone, in order to create an orthodontic anchorage, not dependent on the teeth; and the kit of instruments for orthodontics comprising at least an orthodontic microscrew.

## Description

### FIELD OF THE INVENTION

The present invention relates to the field of orthodontic instruments, and in particular to an orthodontic microscrew.

### STATE OF THE ART

The methods currently used in orthodontic practice to control misaligned teeth have noteworthy limits, due in particular to the fact that the means used are always anchored to the dental structures.

For good results in realignment, a high level of co-operation by the patient is required and the disadvantages in terms of discomfort for the patient are considerable.

Moreover, there are many extradental methods for controlling anchorage, of a more or less invasive type; however, these methods require certain surgical procedures in order to be inserted, which are not always within the capabilities of the orthodontist.

Consequently, there is a great need in the sector for new orthodontic means which allow skeletal anchorage to be performed, with a simplified surgical procedure, both for application and removal, both in the vestibular and lingual technique, and which can be performed by the orthodontist without the aid of a dental surgeon or implant dentist.

There is also a need for reliable orthodontic means, without contraindications, which allow a reduction of treatment times, while at the same time guaranteeing patient comfort and predictable results.

### SUMMARY OF THE INVENTION

A first aim of the present invention is therefore to provide an orthodontic microscrew which, thanks to extremely small dimensions and technical specifications, make surgical insertion of the screw simple and quick, while maintaining high levels of safety and stability through time, and increased comfort for the patient.

A further aim of the invention is to provide a kit of instruments for orthodontics comprising one or more of the aforesaid orthodontic microscrews.

To this aim the present orthodontic microscrew has been developed, comprising:
- a portion intended for orthodontic anchorage with the teeth;
- a portion intended to occupy the transmucosal space of the gum;
- a threaded portion intended to be implanted in the maxillary or mandibular bone, lingually or vestibularly.

A first advantage of the present orthodontic microscrew consists in the simplicity with which the microscrew is inserted, making it possible for technicians without specific surgical training to perform the surgical procedure, also allowing a reduction in the number of radiographic examinations normally performed to check correct insertion of the screw.

A second advantage consists in the fact that the simplicity of the surgical insertion operation allows minimisation of procedure times. In this way, the comfort of the patient increases, as only very low doses of surface anaesthetic require to be administered.

A third advantage is represented by the increased primary retention of the microscrew and by the greater stability thereof in the bone.

A fourth advantage is represented by the ease with which the screw is removed at the end of treatment, so much so that the patient does not even require an anaesthetic.

These and other advantages will be more apparent from the description below and from the drawings, to be considered as non-limiting examples of the invention.

### BRIEF DESCRIPTION OF THE DRAWINGS

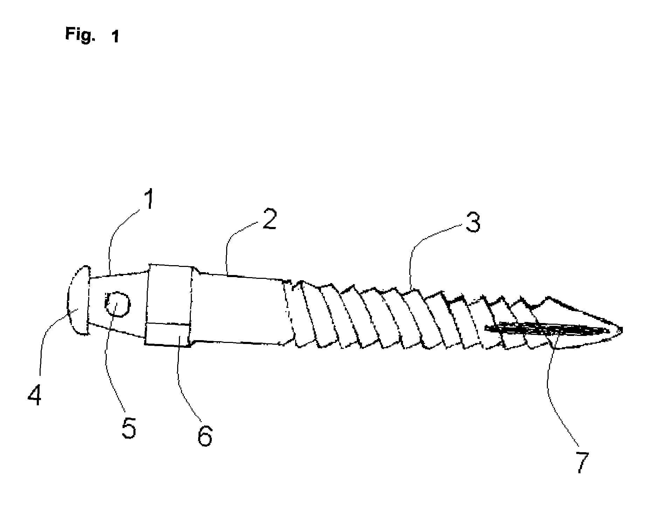

Figure 1 shows a side view of the orthodontic microscrew according to the invention.

### DETAILED DESCRIPTION OF THE INVENTION

With reference to Figure 1, the microscrew according to the invention is characterised by the fact that it comprises, besides the portion for orthodontic anchorage and the screw portion, a smooth intermediate portion, destined to occupy the transmucosal space of the gum, which facilitates maintenance of oral hygiene during the treatment period.

Within the scope of the present invention the term "microscrew" is intended as a screw with reduced dimensions, analogous to the dimensions of the microscrews normally used in maxillofacial and plastic surgery.

With reference to Figure 1, the present orthodontic microscrew comprises:
- a portion (1) provided with a head (4) and with a hole (5), intended for orthodontic anchorage;
- a portion (2) intended to occupy the transmucosal space of the gum;
- a portion (3) with thread intended to be implanted in the maxillary or mandibular bone.

The portion (1) of the present orthodontic screw is provided with the hole (5) for passage of the metal wire normally used in orthodontics to tie the springs and elastic bands to the orthodontic braces, and with a head (4), the form and dimensions of which are suitable to allow direct connection with the attachments of the springs and of the orthodontic elastic bands.

The portion (2) of the present microscrew preferably has a smooth surface, to facilitate cleaning of the emerging part against bacterial agents. This portion (2) of the screw preferably has dimensions of 2.5 mm and 3.5 mm, according to whether the screw is to be inserted in sectors of the mouth in which the mucous layer is of a greater or lesser thickness.

The portion (3) of the present microscrew is preferably level, to prevent osteointegration of the screw, which could make avulsion of the screw difficult at the end of treatment.

According to a preferred embodiment of the invention, the portion (3) is double threaded; this increases primary retention of the microscrew in the bone in which it is implanted and makes penetration of the screw in the bone quicker, simpler and more stable, preventing wobbling which enlarges the receiving site and which is inevitable when using state of the art screws, especially when using screws of increased length.

The turns of the thread of the portion (3) of the present microscrew preferably have a width ranging from 0.5 to 2.0 mm, and more preferably from 1.3 to 1.55 mm. This amplitude is optimal for the microscrew to have a high level of retention and stability in the bone.

The portion (3) is also preferably provided with a groove (6) which makes the screw self-tapping and self-drilling; in this way, it is unnecessary to use, as is customary for other orthodontic screws of this type, a drill to penetrate the bone, except optionally, to facilitate introduction in the cortical portion of the bone.

The portion (3) of the present screw has preferably a conical shape, to make the microscrew more stable during orthodontic load and to facilitate removal at the end of treatment.

Preferably, the present orthodontic microscrew is made of Titanium.

The invention also provides a kit for orthodontics, comprising one or more orthodontic microscrews as described above, together with instruments suitable to insert the microscrews.

The present invention has been described with reference to a preferred embodiment, but it is understood that equivalent modifications can be made by those skilled in the art without departing from the scope of the following claims:

## Claims

1. Orthodontic microscrew, comprising:
- a portion (1) provided with a head (4) and with a hole (5) intended for orthodontic anchorage with the teeth;
- a portion (2) intended to occupy the transmucosal space of the gum;
- a threaded portion (3) intended to be implanted in the maxillary or mandibular bone, lingually or vestibularly.

2. Orthodontic microscrew as claimed in claim 1, wherein said portion (2) has a polished surface.

3. Orthodontic microscrew as claimed in claim 1, wherein said portion (2) has a smooth surface.

4. Orthodontic microscrew as claimed in claim 1, wherein said portion (3) is double threaded.

5. Orthodontic microscrew as claimed in claim 1, wherein the turns of said thread of the portion (3) have a width ranging from 0.5 to 2.0 mm.

6. Orthodontic microscrew as claimed in claim 5, wherein the turns of said thread of the portion (3) have a width ranging from 1.3 to 1.55 mm.

7. Orthodontic microscrew as claimed in claim 1, wherein said portion (3) is provided with a groove (6) which makes the screw self-tapping and self-drilling.

8. Orthodontic microscrew as claimed in claim 1, wherein said portion (3) has a conical form.

9. Orthodontic microscrew as claimed in claims 1-8, wherein said screw is made of Titanium.

10. Kit for orthodontics, comprising one or more orthodontic microscrews as defined in claims 1-9.
